# EUROPEAN PATENT APPLICATION

(11) **EP 3 339 714 A1**
(43) Date of publication of application: **27.06.2018**
(21) Application number: 16205425.8
(22) Date of filing: 20.12.2016
(51) Int. Cl.: F16M 11/02, F16M 11/16

(54) **AN APPARATUS AND ASSOCIATED METHODS FOR VIRTUAL REALITY IMAGE CAPTURE**

(71) Applicant: Nokia Technologies Oy, 02610 Espoo (FI)
(72) Inventor: Sanguinetti,, Alejandro, 00100 Helsinki (FI)
(74) Representative: Potter Clarkson LLP

(57) **Abstract**

A virtual reality image capture device self-righting monopod configured to support and be attached to a virtual reality image capture device, the virtual reality image capture device configured to capture a 360° field of view in an image capture plane; the virtual reality image capture device self-righting monopod configured to self-maintain a predetermined upright orientation parallel to the gravity vector by automatically applying a balancing force to counterbalance an unbalancing force acting to move the virtual reality image capture device self-righting monopod away from the upright orientation, the virtual reality image capture device self-righting monopod dimensioned to lie within a ground-facing blind spot of an attached virtual reality image capture device.

## Description

### Technical Field

The present disclosure relates to the field of virtual reality and, in particular, to supporting a virtual reality image capture device using a self-righting monopod. Certain disclosed aspects/examples relate to portable electronic devices.

### Background

Virtual reality (VR) may provide an immersive experience for a user. Post production editing of VR captured content (e.g. images and audio) can be technically challenging and time consuming.

The listing or discussion of a prior-published document or any background in this specification should not necessarily be taken as an acknowledgement that the document or background is part of the state of the art or is common general knowledge. One or more aspects/examples of the present disclosure may or may not address one or more of the background issues.

### Summary

In a first aspect there is provided a virtual reality image capture device self-righting monopod configured to support and be attached to a virtual reality image capture device, the virtual reality image capture device configured to capture a 360° field of view in an image capture plane; the virtual reality image capture device self-righting monopod configured to self-maintain a predetermined upright orientation parallel to the gravity vector by automatically applying a balancing force to counterbalance an unbalancing force acting to move the virtual reality image capture device self-righting monopod away from the upright orientation, the virtual reality image capture device self-righting monopod dimensioned to lie within a ground-facing blind spot of an attached virtual reality image capture device.

The virtual reality image capture device self-righting monopod may comprise two flywheels configured to rotate in opposite directions to self-maintain the predetermined upright orientation of the virtual reality image capture device self-righting monopod parallel to the gravity vector.

The virtual reality image capture device self-righting monopod may comprise a third flywheel configured to resist rotation of the virtual reality image capture device self-righting monopod about the upright axis of the virtual reality image capture device self-righting monopod in use.

The two flywheels may be located at the end of the virtual reality image capture device self-righting monopod proximal to the attachment point of the virtual reality image capture device

The two flywheels may be configured to be located at an adjustable position along the length of the virtual reality image capture device self-righting monopod.

The virtual reality image capture device self-righting monopod of any preceding claim may comprise a friction mat located on the base of the virtual reality image capture device self-righting monopod, the friction mat configured to resist rotation of the virtual reality image capture device self-righting monopod about the upright axis of the virtual reality image capture device self-righting monopod in use. That is, the friction mat may be located at the end of the self-righting monopod distal from the attachment point of the virtual reality image capture device.

In some examples the gravity vector may be normal to the image capture plane. In some examples the gravity vector may not be normal to the image capture plane (for example if the self-righting monopod is operated on a slope and the virtual reality image capture device is tilted to maintain an image capture plane parallel with the sloping ground level).

The virtual reality image capture device may be configured to capture up to a 195° field of view perpendicular to and centred about the image capture plane.

The image capture plane may be a horizontal plane normal to the gravity vector. The image capture plane may be parallel to ground level.

The virtual reality image capture device self-righting monopod may be configured to have a height of between 60 cm and 190 cm.

The virtual reality image capture device self-righting monopod may be telescopic. The height of the virtual reality image capture device self-righting monopod may vary between 60 cm and 190 cm.

The virtual reality image capture device self-righting monopod may comprise: a sensor configured to detect the stability of the virtual reality image capture device self-righting monopod and provide the detected stability to a sensory indicator in communication with the sensor; the sensory indicator configured to, based on the detected stability provided by the sensor, provide a sensory indication of one or more of:
the virtual reality image capture device self-righting monopod being stable enough to self-maintain an upright orientation following release of an external support of the virtual reality image capture device self-righting monopod;
the virtual reality image capture device self-righting monopod being self-maintained in the upright position stably enough for image capture by an attached virtual reality image capture device;
the virtual reality image capture device self-righting monopod being self-maintained in the upright position but being too unstable for image capture by an attached virtual reality image capture device; and
the virtual reality image capture device self-righting monopod being unstable and requiring an external support to prevent loss of an upright orientation.

The virtual reality image capture device self-righting monopod may comprise the sensory indicator.

The sensory indication may comprises one or more of: an audio indication (e.g. a beep, a pre-recorded spoken message), a visual indication (e.g. an illuminated LED), and a haptic indication (e.g. a vibration of a handheld unit in communication with the virtual reality image capture device self-righting monopod).

The virtual reality image capture device self-righting monopod of any preceding claim may comprise a virtual reality image capture device attached thereto.

In a second aspect there is provided a computer-implemented method for a virtual reality image capture device self-righting monopod configured to support and be attached to a virtual reality image capture device, the virtual reality image capture device configured to capture a 360° field of view in an image capture plane; the virtual reality image capture device self-righting monopod dimensioned to lie within a ground-facing blind spot of an attached virtual reality image capture device, the computer-implemented method comprising:
automatically applying a balancing force to counterbalance an unbalancing force acting to move the virtual reality image capture device self-righting monopod away from the upright orientation, to maintain a predetermined upright orientation parallel to the gravity vector of the virtual reality image capture device self-righting monopod.

In a third aspect there is provided a computer readable medium comprising computer program code stored thereon, the computer readable medium and computer program code being configured to, when run on at least one processor, perform the method of,
for a virtual reality image capture device self-righting monopod configured to support and be attached to a virtual reality image capture device, the virtual reality image capture device configured to capture a 360° field of view in an image capture plane; the virtual reality image capture device self-righting monopod dimensioned to lie within a ground-facing blind spot of an attached virtual reality image capture device,
automatically applying a balancing force to counterbalance an unbalancing force acting to move the virtual reality image capture device self-righting monopod away from the upright orientation, to maintain a predetermined upright orientation parallel to the gravity vector of the virtual reality image capture device self-righting monopod.

The present disclosure includes one or more corresponding aspects, examples or features in isolation or in various combinations whether or not specifically stated (including claimed) in that combination or in isolation. Corresponding means and corresponding functional units (e.g., an upright orientation maintainer, a balancing force application unit, a virtual reality image capture device support) for performing one or more of the discussed functions are also within the present disclosure.

Corresponding computer programs for implementing one or more of the methods disclosed are also within the present disclosure and encompassed by one or more of the described examples.

The above summary is intended to be merely exemplary and non-limiting.

### Brief Description of the Figures

A description is now given, by way of example only, with reference to the accompanying drawings, in which:
figure 1 illustrates an example VR apparatus;
figure 2 shows an example virtual reality image capture device self-righting monopod;
figure 3 shows an example blind spot of a VR image capture device mounted on a self-righting monopod;
figure 4 shows example sensory indicators for a virtual reality image capture device self-righting monopod;
figure 5 shows an example stabilising apparatus of a virtual reality image capture device self-righting monopod;
figures 6a-6c show an example virtual reality image capture device self-righting monopods located on level and sloping ground;
figure 7 shows an example computer-implemented method; and
figure 8 shows an example computer readable medium comprising computer code.

### Description of Example Aspects

Virtual reality (VR) may use a VR display comprising a headset, such as glasses or goggles or virtual retinal display, or one or more display screens that surround a user to provide the user with an immersive virtual experience. A virtual reality apparatus, using the VR display, may present multimedia VR content representative of a scene to a user to simulate the user being virtually present within the scene. The virtual reality scene may replicate a real world scene to simulate the user being physically present at a real world location or the virtual reality scene may be computer generated or a combination of computer generated and real world multimedia content. The virtual reality scene may be provided by a panoramic video (such as a panoramic live broadcast or pre-recorded content), comprising a video having a wide or 360° field of view (or more, such as above and/or below a horizontally oriented field of view). The user may then be presented with a VR view of the scene and may, such as through movement of the VR display (i.e. headset), move the VR view to look around the scene. Accordingly, a three-dimensional virtual reality space may be provided in which the virtual reality content is displayed and in which the user can look around and, optionally, explore by translation through the VR space.

The VR content provided to the user may comprise live or recorded images of the real world, captured by a VR image/content capture device, for example. The VR content may provide photographic or video imagery over 360° horizontally and over 195° vertically in some examples. A VR content capture device may comprise one or more cameras and one or more (e.g. directional and/or ambient) microphones configured to capture the surrounding visual and aural scene from a point of view. An example VR content capture device is a Nokia OZO camera of Nokia Technologies Oy.

Capturing VR content using a VR image/content capture device may require that the VR image capture device is fixed in a stable position during image capture to obtain clear images. The VR image capture device may, for example, be supported on a tripod. However, when recording VR content over a large angular range (e.g. 360° horizontally and 195° vertically) the supporting tripod or mount used to support the VR image capture device may be present in the field of view of the VR image capture device. This may be undesirable as the image of a tripod/support may detract from the scene of interest.

Post-processing of VR captured images can be very technically complex, require the expertise of a skilled image editing engineer, require the use of specialist post-processing software, and require significant time and money to be expended in removing the unwanted objects from the VR images.

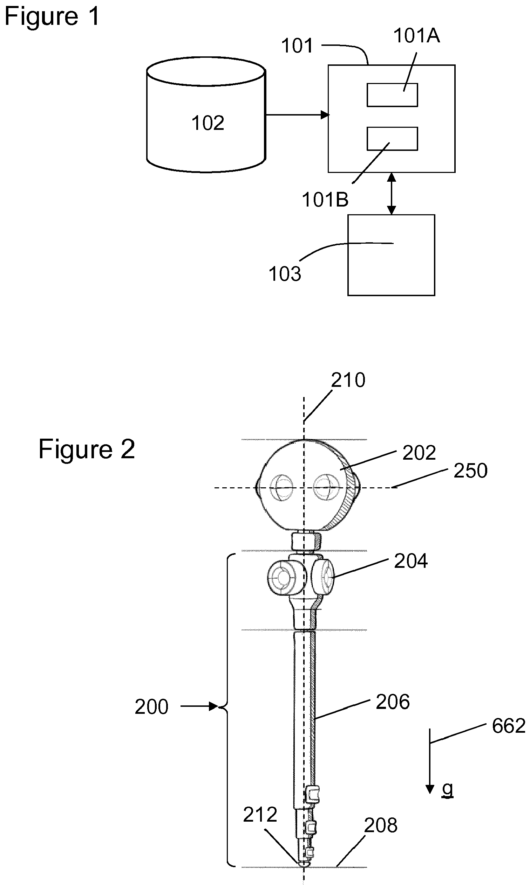

With reference to Figure 1, a VR apparatus 101 is shown for presenting VR content to a user. A store 102 is shown representing the VR content stored in a storage medium or transiently present on a data transmission bus as the VR content is captured and received by the VR apparatus 101. Capture of the VR images for storage in the store 102 is described below. The VR content may be captured by at least one VR content capture device and may be live or recorded. A user may use a VR head set 103 or other VR display to view the VR content.

In this embodiment the VR apparatus 101 may have only one processor 101A and one memory 101 B but it will be appreciated that other embodiments may utilise more than one processor and/or more than one memory (e.g. same or different processor/memory types).

The processor 101A may be a general purpose processor dedicated to executing/processing information received from other components, such as the VR apparatus 101, in accordance with instructions stored in the form of computer program code on the memory. The output signalling generated by such operations of the processor is provided onwards to further components, such as to the VR apparatus 101 for display of the object image to the user via a VR head set 103, for example.

The memory 101 B (not necessarily a single memory unit) is a computer readable medium (solid state memory in this example, but may be other types of memory such as a hard drive, ROM, RAM, Flash or the like) that stores computer program code. This computer program code stores instructions that are executable by the processor 101A, when the program code is run on the processor. The internal connections between the memory 101 B and the processor 101A can be understood to, in one or more example embodiments, provide an active coupling between the processor 101A and the memory 101B to allow the processor 101A to access the computer program code stored on the memory 101 B.

In this example the processor 101A and the memory 101B are all electrically connected to one another internally to allow for electrical communication between the respective components. In this example the components are all located proximate to one another so as to be formed together as an ASIC, in other words, so as to be integrated together as a single chip/circuit that can be installed into an electronic device. In other examples one or more or all of the components may be located separately from one another.

Figure 2 shows an example virtual reality image capture device (VR-ICD) self-righting monopod 200, illustrated with an attached VR-ICD 202. The VR-ICD self-righting monopod 200 is configured to support and be attached to a VR-ICD 202, as shown. A monopod may be considered to be a single-legged support. Throughout the specification, for clarity, the term "monopod" is used to refer to a virtual reality image capture device (VR-ICD) self-righting monopod.

The VR-ICD is configured to capture a 360° field of view in an image capture plane 250. In this example the VR-ICD comprises a plurality of cameras located on an equatorial line around the roughly spherical VR-ICD 202. Of course, other shapes and designs of VR-ICD are possible. This plurality of cameras together can capture a 360° scene in their combined fields of view. In some examples the VR-ICD may also capture audio as well as visual (the apparatus 202 may then be called a virtual reality content capture device, or VR-CCD). In some examples the VR-ICD may comprise one or more cameras having a field of view away from the image capture plane 250, for example by pointing upwards (away from the monopod 200) or downwards (towards the monopod 200).

The monopod 200 is configured to self-maintain a predetermined upright orientation parallel to the gravity vector 262. In this example, because the ground level 208 is flat (normal to the gravity vector 262), the monopod 200 is self-maintaining an upright orientation at right angles to the ground 208. The upright orientation is predetermined because the orientation may be considered to be upright within a predetermined tolerance. For example, the monopod 200 may be considered upright if it is oriented parallel to the gravity vector within, for example, a predetermined tolerance/error of less than ± 0.1°, ± 0.1°, ± 0.2°, ± 0.5°, ± 1°, ± 2°, , ± 3°, , ± 4°, , ± 5°, or more than ± 5°.

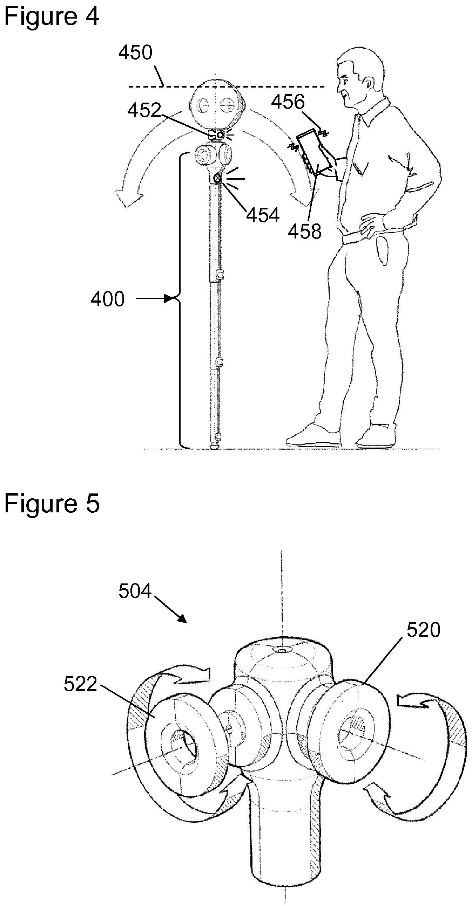

The monopod 200 is configured to self-maintain the predetermined upright orientation by automatically applying a balancing force to counterbalance an unbalancing force acting to move the monopod 200 away from the upright orientation 210. In this example the monopod 200 may be considered to comprise a support member 206, and a balancing member 204. In some examples the support member 206 and balancing member 204 may be integrated into a single unit, and in other example the two members 206, 208 may be separable and connected to form (at least part of) the monopod 200. The balancing member 204 may comprise, for example, a flywheel arrangement as discussed further in relation to Figure 5.

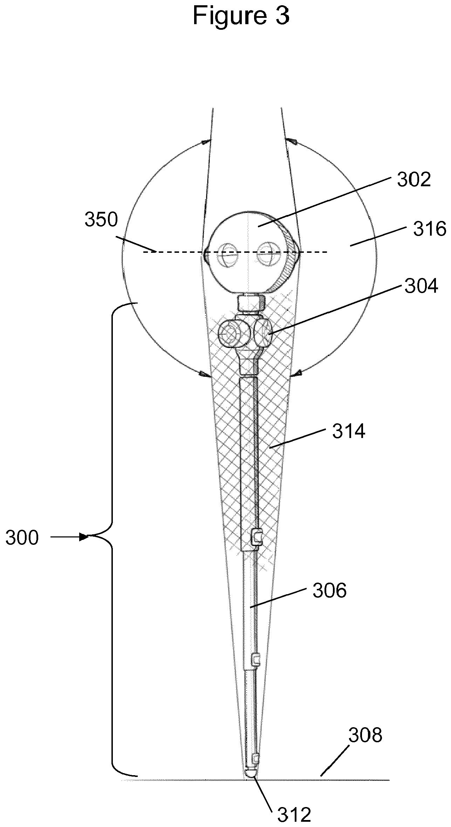

The monopod 200 is dimensioned to lie within a ground-facing blind spot of an attached VR-ICD 202. This is discussed further in relation to Figure 3. Thus in relation to the balancing member 204, any self-righting mechanism which may be operated to maintain an upright orientation of the self-righting monopod may be used as the balancing member 204 provided it meets the criterion of lying within a ground-facing blind spot of the attached VR-ICD 202.

The cameras of the VR-ICD 202 can each capture a particular field of view. The combined field of view of the plurality of cameras of the VR-ICD 202 may have a blind spot which is below the VR-ICD (i.e. towards the ground underneath the VR-ICD, thus "ground-facing"). The blind spot is a spatial region which is not captured in an image by the cameras of the VR-ICD (because it is a space outside the fields of view of the cameras), or not captured as an image/images in sufficient detail for that portion of the captured image(s) to be used as part of the VR reconstructed image. If the monopod 200 lies in the ground-facing blind spot of the VR-ICD 202, then a reconstructed VR image obtained from the images captured by the cameras of the VR-ICD 202 will not include images of the monopod 200.

It may be undesirable to have images of (part of) the support for the VR-ICD 202 included in the captured images, because they may detract from the captured scene of interest. By omitting the monopod 200 from being captured in the images, due to it being positioned in a blind spot of the VR-ICD 202, there is a reduced need (or ideally no need) for image post-processing to remove images/artefacts of the monopod 200 from the captured images.

In this example, the balancing member 204 comprises two flywheels which are located at the end of the monopod 200 proximal to the attachment point of the VR-ICD 202. Locating the balancing member 204 as close as possible to the upper end (in use) of the monopod 200, proximal to the attachment point of the VR-ICD 202, may aid the self-balancing capability of the monopod 200, by positioning the balancing member 204, which generates the forces acting to overcome any unbalancing force, as far from the fulcrum as possible (the fulcrum, or pivot point, being the point 212 where the monopod 202 touches the ground 208). To counterbalance a particular unbalancing force acting to push the monopod 200 over, the balancing member 204 needs to provide a larger force if it is located closer to the fulcrum 212.

The unbalancing force may be a force (e.g. applied by a source external to the monopod) which causes the monopod to be oriented at an angle away from parallel with the gravity vector, for example, an angle of over 45°, 40°, 35°, 30°, 25°, 20°, 15°, 10°, or less than 10° away from parallel with the gravity vector. The unbalancing force may depend on the properties of the monopod, an attached VR-ICD and/or the balancing arrangement of the monopod. The unbalancing force may comprise the force acting to pull the monopod away from a vertical orientation due to the orientation of the monopod and the mass of the monopod. Other parameters of the monopod may be accounted for in determining the unbalancing force which needs to be overcome by the balancing force in order to return the monopod to an upright orientation, such as the velocity, acceleration, or momentum of the monopod (e.g. as determined by an accelerometer within the monopod), or one or more external conditions (e.g. a force due to a wind blowing on the monopod).

Further, locating the balancing member 204 as close as possible to the upper end (in use) of the monopod 200, proximal to the attachment point of the VR-ICD 202, may improve minimising the visibility of the monopod 200 in images captured by the attached VR-ICD 202. This can be understood in relation to Figure 3 discussed below.

The monopod 200 in Figure 2 further comprises a friction mat 212 located on the base of the monopod 200. The friction mat is configured to resist rotation of the monopod 200 and attached VR-ICD 202 about the upright axis 210 of the monopod 200 in use. The upright axis 210 in use may be called the long axis or longitudinal for a monopod having an elongate shape. The base of the monopod is the bottom end of the monopod in use, which contacts the floor/surface on which the monopod is resting in order to resist movement by "gripping" the floor/surface or resisting movement of the monopod on the floor/surface.

For example, if the balancing member 204 comprises two flywheels, there may be a tendency for the monopod 200 to experience a net rotation force due to the spinning flywheels which acts to rotate the monopod 200 about the longitudinal/upright axis 210. The friction may 212 may act to resist such rotation. The friction mat 212 may comprise, for example, a rubber or polymer material, a textured surface, an adhesive surface, or any other particular material or surface which has a property of increasing the coefficient of friction at the base of the VR-ICD self-righting monopod to resist sliding/rotational movement of the monopod 200 against the ground.

In some examples, the monopod 200 may have a height of between 60 cm and 190 cm. In some examples, the monopod 200 may be telescopic (have an adjustable height). The height may be adjustable between, for example, heights of 60 cm and 190 cm. The height of the monopod 200 may be set or adjustable to be at a typical viewer's "eye level", to reproduce what a viewer of the captured VR content would expect to see in real life. The balancing member 204 may be configured to operate according to the height of the monopod 200, since the operation of the balancing mechanism of the balancing member 202 may require the height of the monopod (and/or the height of the balancing member 204 and/or attached VR-ICD 202) to be provided as input to the balancing member 204 so that it can provide appropriate counterbalancing forces.

In some examples, the height of the balancing member 204 may be adjustable along (at least part of) the length of the monopod 204 to allow for the provision of appropriate counterbalancing forces by the balancing member 204. For example, the balancing member 204 may fit around the monopod shaft 206 and may be configured to slide up and down the shaft 206 and be fixed into position, for example by tightening a position fixing key or other suitable fixing mechanism. In other words, the balancing member 204 (e.g. two flywheels) may be configured to be located at an adjustable position along the length of the monopod 200.

In some examples, the monopod may comprise the VR-ICD 202. The VR-ICD 202 may be releasably attached to the monopod 200 in some examples, or may form part of an integral unit comprising the VR-ICD 202 and monopod 200 together in some examples. In some examples, the VR-ICD 202 may comprise a balancing memberwhich, similarly to the balancing member 204 of the monopod 200, is configured to apply a balancing force to counterbalance an unbalancing force acting to move the monopod 200 away from the upright orientation 210.

Figure 3 shows an example blind spot of a VR image capture device mounted on a self-righting monopod. Similar elements to those discussed in Figure 2 have similar reference numbers, and will not be discussed again in detail here.

Figure 3 shows a monopod 300 supporting a VR-ICD 302. In this example, the VR-ICD 302 comprises a plurality of cameras around an equator of the VR-ICD 302 to together provide a 360° image capture field of view in an image capture plane 350 (in this example a horizontal plane). The cameras around the image capture plane 350 in this example also provide a 195° field of view 316 perpendicular to and centred about the image capture plane 350. That is, each camera can capture image content 97.5° above and 97.5° below the image capture plane 316. This field of view of the cameras of the VR-ICD 302, and the finite size of the VR-ICD 302, mean that a blind spot is present 314 which will not be captured by the cameras of the VR-ICD 302 because it is outside their fields of view. The blind spot 314 may be termed a "ground-facing" blind spot because it faces the ground from the point of view of the VR-ICD 302.

In this example with a greater than 180° field of view 316 perpendicular to and centred about the image capture plane 350, the blind spot is a truncated cone shape with the base of the cone around the circumference of the VR-ICD 350 and the apex towards ground level. In an example with a 180° field of view 316 perpendicular to and centred about the image capture plane 350, the blind spot would form a cylinder. In an example with a less than 180° field of view 316 perpendicular to and centred about the image capture plane 350, the blind spot would form a truncated cone with the base at ground level and the truncated apex at the circumference of the VR-ICD 350.

Of course, in examples where the VR-ICD includes one or more ground facing cameras (that is, with a line of sight away from an equatorial/horizontal image capture plane 316 perpendicular to the length of the monopod 300), different ground facing fields of view and different ground facing blind spots are possible.

The blind spot in some examples may be considered to be the area projected on the ground which is not captured by the VR-ICD. The blind spot in some examples may be considered to be the volume between the VR-ICD and the ground which is not captured by the VR-ICD. For either definition, the size of the blind spot which depends on the size of the VR-ICD, the length of the monopod, and the vertical angular field of view of the VR-ICD.

In some examples, a VR-ICD (e.g. a Nokia OZO camera) may have dimensions of 264mm depth (front to rear) x 170mm height x 160mm width (diameter). Taking the diameter as 16cm and the height of the monopod at 190cm, an approximate volume of the blind spot may be calculated as 0.0117m³. An approximate diameter of a VR-ICD, and thus an approximate area of the blind spot at the VR-ICD may be calculated as 200cm² (A = π x (8cm)²).

The monopod 300 is dimensioned to lie within the ground-facing blind spot 314 of the attached VR-ICD 302. In this way the monopod 300 will not be captured in images taken by the VR-ICD 302. Thus, in post-processing of the captured images, there is no need to remove the monopod from the images because it has not been captured in the images. In other examples, the field of view perpendicular to and centred about the image capture plane 350, and the dimensions of the VR-ICD 302 and monopod 300 (both the length/height of the monopod 30 and the width dimensions of the monopod 300, including the dimensions of the balancing member 304) may vary, but provided that the monopod 300 lies within the ground-facing blind spot, it will not need to be erased from captured images in post-production.

For example, a larger VR-ICD 302, shorter monopod 300 and narrower field of view 316 perpendicular to the image capture plane 650 will increase the size of the blind spot, which may allow for a larger balancing member 304 to be used and still be hidden from image capture. In some examples, the monopod may still be captured in images taken by the VR-ICD, but only a very small portion of the images will include the monopod, thereby making post-processing easier than, for example, if a tripod was used to support the VR-ICD which would feature more significantly in captured images and require more post-processing work to remove it from the images.

In examples where the position of the balancing member 304 is adjustable along the length of the monopod 306, and in the example of a blind spot having a cone shape as shown in Figure 3, there is a greater blind spot volume in which to position the balancing member 304 closer to the VR-ICD end of the monopod, where the cone is wider.

Figure 4 shows an example of a VR-ICD self-righting monopod 400 comprising sensory indicators 452, 454, and a handheld device 458 in communication with the monopod 400 which also comprises a sensory indicator 456. In other examples, a different number of sensory indicators may be present. The monopod in this example comprises a visual sensory indicator 452 (e.g. an LED) configured to light up to visually indicate a status of the monopod stability to a user, and an audio sensory indicator 454 (e.g. a speaker) configured to provide an audio indication of the status of the monopod stability to a user. The monopod is also configured to provide a signal to an external device, in this example a handheld electronic device 458, and the handheld device 456 is configured to use the received signal and provide a haptic indication 456 (e.g. a vibration) of monopod 400 stability to a user.

The monopod 400 in this example comprises a sensor (not shown) which is configured to detect the stability of the monopod 400 and provide the detected stability to a sensory indicator 452, 454, 456 in communication with the sensor. The sensory indicators 452, 454, 456 are configured to, based on the detected stability provided by the sensor, provide a sensory indication to a user. The sensor may comprise, for example, a gyroscope, an accelerometer, a magnetometer, or a GPS sensor.

A sensory indication may be of the monopod 400 being stable enough to self-maintain an upright orientation following release of an external support of the monopod 400. For example, the first time the user sets the monopod 400 on the ground the user will be supporting the monopod 400 upright until he lets go. The monopod 400 may, for example, illuminate a flashing green light 452, emit a "ready" audio alert 454 (e.g. a beep), and/or cause a haptic (e.g. vibrate) alert to a separate device 458 to signal that, when the user releases the monopod 400, it is stable enough to remain upright.

A sensory indication may be of the monopod 400 being self-maintained in the upright position stably enough for image capture by an attached VR-ICD. For example, once the monopod 400 is released by the user, it may take a short time before the monopod 400 is self-stable enough for image capture of a high enough quality for use. The monopod 400 may, for example, illuminate a green light 452, emit a "ready for image capture" audio alert 454, and/or cause a haptic alert to a separate device 458 to signal that the monopod 400 is stable enough to remain upright and capture images which will meet a pre-set quality threshold (e.g. the monopod 400 is stable enough for an attached VR-ICD to capture images which are not blurry/shaky due to movement of the monopod 400 and attached VR-ICD).

A sensory indication may be of the monopod 400 being self-maintained in the upright position but being too unstable for image capture by an attached VR-ICD. For example, the monopod 400 may be self-stable but not stable enough for image capture of a high enough quality for use. The monopod 400 may, for example, illuminate an amber light 452, emit a "wait until stable" audio alert 454, and/or cause a haptic alert to a separate device 458 to signal that the monopod 400 is not stable enough for image capture (e.g. captured images from an attached VR-ICD may be blurry/shaky due to movement of the monopod 400).

A sensory indication may be of the monopod being unstable and requiring an external support to prevent loss of an upright orientation. For example, if the monopod is knocked by a passer-by, or blown by a gust of wind, the unbalancing force acting to push the monopod 400 over may be too strong for any balancing force which the monopod 400 can apply to self-right the monopod 400. The monopod 400 may, for example, illuminate a red light 452, emit a "warning - unstable" audio alert 454 (e.g. an alarm), and/or cause a haptic (e.g. vibrate) alert to a separate device 458 to signal that the monopod is about the fall over and requires external support.

In this example, the visual and audio sensory indicators 452, 454 are part of the monopod 400, and the haptic sensory indicator is part of a handheld electronic device 458 separate from and in communication with the monopod 400 sensor. In other examples, the visual and/or audio sensory indicators may not be part of the monopod 400 and may be part of a separate handheld electronic device, or separate handheld electronic devices, in communication with the monopod 400 sensor.

The handheld apparatus 458 shown in the above examples may be a portable electronic device, a laptop computer, a mobile phone, a Smartphone, a tablet computer, a personal digital assistant, a smartwatch, smart eyewear, a virtual reality apparatus, or a module/circuitry for one or more of the same.

Figure 5 shows an example stabilising apparatus/balancing member 504 of a virtual reality image capture device self-righting monopod, which is configured to self-right the monopod so it can remain upright. In this example, the monopod comprises two flywheels 520, 522 in the balancing member 504 which are configured to rotate in opposite directions to self-maintain the predetermined upright orientation of the monopod parallel to the gravity vector. The flywheels may be battery operated, and/or may be operated by a rechargeable motor, for example. In some examples (e.g. a Nokia OZO camera including battery pack) the VR-ICD may have a mass of approximately 4.2kg. Other VR-ICDs may weight more, or less, than this (e.g. between 500g - 10kg, but may be more, or less, in other examples). The stabilising apparatus/balancing member 504 may be configured to balance a VR-ICD of such a mass.

Other balancing members may be used to maintain the monopod in an upright orientation, such as a gyroscope configured to rotate and generate angular momentum to provide the balancing force to counteract a detected unbalancing force applied to the monopod. The balancing member may be termed an inertial stabiliser because it stabilises the upright position of the monopod using inertial forces to counteract any unbalancing forces.

In some examples, the monopod may comprise a third flywheel (not shown) configured to resist rotation of the monopod about the longitudinal/upright axis of the monopod in use. The use of two flywheels 520, 522 to maintain an upright orientation of the monopod may cause the monopod to rotate, which is undesirable. The use of a third flywheel may act to prevent such rotation by rotating the opposite sense to the rotation of the monopod. The third flywheel may be located at the end of the monopod proximal to the attachment point of the VR-ICD, and may be proximal to the location of the balancing member (e.g. pair of flywheels) in some examples. In some examples, the third flywheel may be part of the balancing member, for example located on one side of the balancing member so that it can slide up and down the shaft of the monopod. In other examples, the third flywheel may be part of a secondary balancing member additional to the main/first balancing member. In such an example, the second balancing member may clamp to the monopod, or may be a (removable) part of the monopod. There may be a motor configured to control the rotation of the third flywheel in both clockwise and anticlockwise senses. There may be one or more sensors configured to detect unwanted rotation of the monopod and the sensor(s) may be in communication with a motor to control the rotation of the third flywheel accordingly to prevent/counteract rotation of the monopod. Possible sensors include a gyroscope, an accelerometer, a magnetometer, and a GPS sensor.

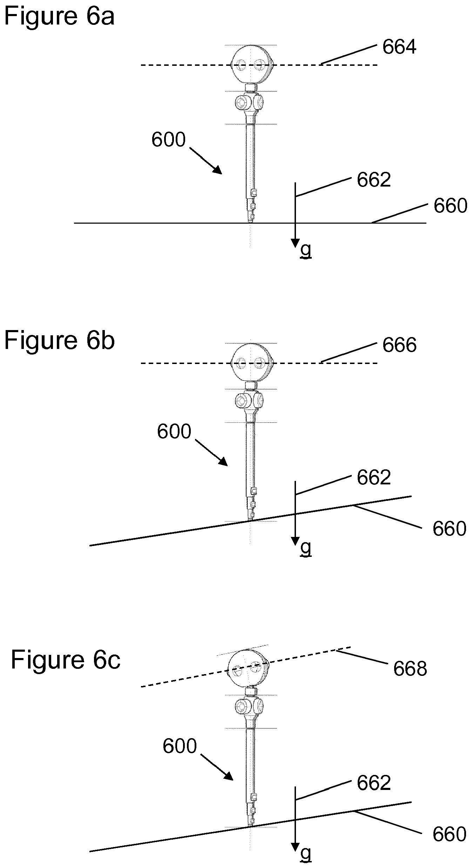

Figures 6a-6c show an example monopod 600 located on level and sloping ground. In Figure 6a, the monopod 600 is on level ground 660 (normal to the gravity vector 662) and the image capture plane 664 of the attached VR-ICD is parallel to ground level 600 and normal to the gravity vector 662. The image capture plane 664 is normal to the length of the monopod 600.

In Figure 6b, the monopod 600 is on sloping ground 660 (not normal to/perpendicular to the gravity vector 662). The image capture plane 666 of the attached VR-ICD is not parallel to ground level 600, but it is normal to the gravity vector 662. The image capture plane 664 is normal to the length of the monopod 600.

In Figures 6a and 6b, the image capture plane 664, 666 is perpendicular to the length of the monopod 600 (and to the gravity vector 662, since the length of the monopod 600 and the gravity vector 662 are always parallel for the self-righting monopod 600). Thus the ground-facing blind spot of the VR-ICD encapsulates the location of the monopod 600 in the same way whether the ground level is flat/horizontal as in Figure 6a or sloping away from horizontal as in Figure 6b.

In Figure 6c, the monopod 600 is on sloping ground 660 (not normal to/perpendicular to the gravity vector 662). The image capture plane 668 of the attached VR-ICD is tilted compared with Figures 6a and 6b, so the image capture plane 668 is parallel to ground level 600, but it is not normal/perpendicular to the gravity vector 662 nor to the length of the monopod 600. As a consequence, the monopod 600 will be closer to the edge of the blind spot region on one side of the blind spot cone (downhill as shown in Figure 6c) compared with the opposite side of the blind spot cone (uphill as shown in Figure 6c). Provided the monopod remains within the blind spot cone, it will not appear in captured images.

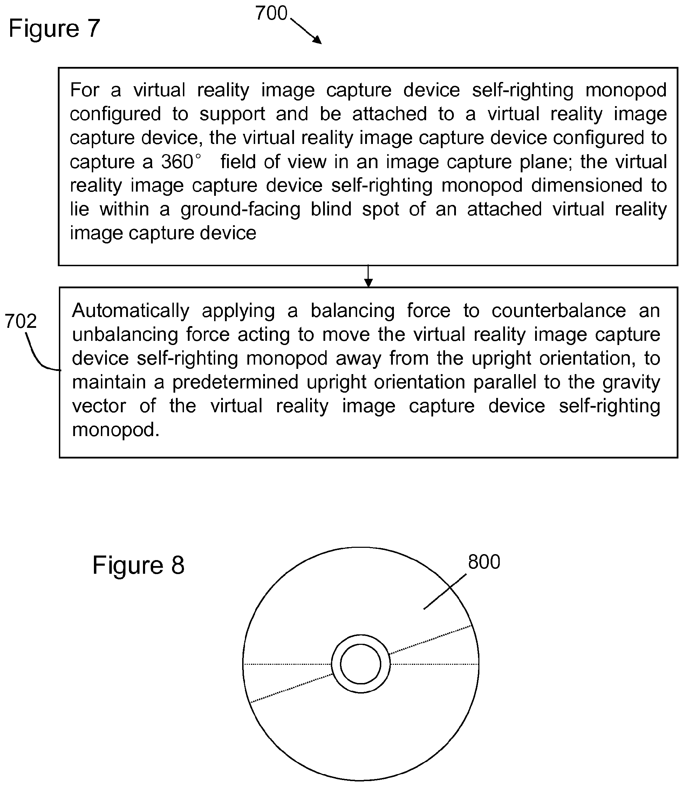

Figure 7 shows an example a computer-implemented method 700 for a virtual reality image capture device self-righting monopod configured to support and be attached to a virtual reality image capture device, the virtual reality image capture device configured to capture a 360° field of view in an image capture plane; the virtual reality image capture device self-righting monopod dimensioned to lie within a ground-facing blind spot of an attached virtual reality image capture device. The computer-implemented method comprises automatically applying a balancing force to counterbalance an unbalancing force acting to move the virtual reality image capture device self-righting monopod away from the upright orientation, to maintain a predetermined upright orientation parallel to the gravity vector of the virtual reality image capture device self-righting monopod 702.

An example computer implemented method step may be determining the balancing force required to be applied by the monopod in order to counterbalance an unbalancing force acting to move the monopod away from the upright orientation, to maintain a predetermined upright orientation parallel to the gravity vector of the monopod. For example, the orientation (e.g. as determined by a gyroscope), and motion (e.g. determined by an accelerometer) of the monopod may be taken as input as used to calculate the balancing force required to counterbalance the unbalancing force. Thus, another example computer implemented method step may be receiving, as input, one or more parameters associated with the monopod and use the received parameters to calculate the required balancing force to be applied by the monopod to counterbalance the unbalancing force.

Figure 8 illustrates schematically a computer/processor readable medium 800 providing a computer program according to one example. The computer program may comprise computer code configured to perform, control or enable one or more of the computer-implemented method of Figure 7 or other computer-implemented method described herein. In this example, the computer/processor readable medium 800 is a disc such as a digital versatile disc (DVD) or a compact disc (CD). In other embodiments, the computer/processor readable medium 800 may be any medium that has been programmed in such a way as to carry out an inventive function. The computer/processor readable medium 800 may be a removable memory device such as a memory stick or memory card (SD, mini SD, micro SD or nano SD).

Monopods described herein may be used to capture cinematographic content and may reduce the effort, time, required editing expertise, require specialist software, and expense of post-production editing to remove image artefacts arising from capturing VR ICD support equipment (e.g. tripod legs) in the captured VR images.

Monopods described herein may be used to capture journalistic content, where a journalist may wish to arrive at the scene, and quickly and easily set up his VR content capture equipment (the monopod with attached VR-CCD) to capture the scene as a news story is taking place at his location. Again, since post-processing of the captured VR images may be much quicker and easier than, for example, if significant post production editing was required to remove support equipment artefacts from the captured images, the journalist may be able to obtain the VR content ready for broadcasting much more quickly to broadcast the captured content in a timely way (i.e. in a timescale such that the content is broadcast when the associated news story is still relevant).

Any mentioned apparatus and/or other features of particular mentioned apparatus may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/ functional units.

In some examples, a particular mentioned apparatus may be pre-programmed with the appropriate software to carry out desired operations, and wherein the appropriate software can be enabled for use by a user downloading a "key", for example, to unlock/enable the software and its associated functionality. Advantages associated with such examples can include a reduced requirement to download data when further functionality is required for a device, and this can be useful in examples where a device is perceived to have sufficient capacity to store such pre-programmed software for functionality that may not be enabled by a user.

Any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

Any "computer" described herein can comprise a collection of one or more individual processors/processing elements that may or may not be located on the same circuit board, or the same region/position of a circuit board or even the same device. In some examples one or more of any mentioned processors may be distributed over a plurality of devices. The same or different processor/processing elements may perform one or more functions described herein.

The term "signalling" may refer to one or more signals transmitted as a series of transmitted and/or received electrical/optical signals. The series of signals may comprise one or more individual signal components or distinct signals to make up said signalling. Some or all of these individual signals may be transmitted/received by wireless or wired communication simultaneously, in sequence, and/or such that they temporally overlap one another.

With reference to any discussion of any mentioned computer and/or processor and memory (e.g. including ROM, CD-ROM etc.), these may comprise a computer processor, Application Specific Integrated Circuit (ASIC), field-programmable gate array (FPGA), and/or other hardware components that have been programmed in such a way to carry out the inventive function.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/examples may consist of any such individual feature or combination of features. In view of the foregoing description it will be evident to a person skilled in the art that various modifications may be made within the scope of the disclosure.

While there have been shown and described and pointed out fundamental novel features as applied to examples thereof, it will be understood that various omissions and substitutions and changes in the form and details of the devices and methods described may be made by those skilled in the art without departing from the scope of the disclosure. For example, it is expressly intended that all combinations of those elements and/or method steps which perform substantially the same function in substantially the same way to achieve the same results are within the scope of the disclosure. Moreover, it should be recognized that structures and/or elements and/or method steps shown and/or described in connection with any disclosed form or examples may be incorporated in any other disclosed or described or suggested form or example as a general matter of design choice. Furthermore, in the claims means-plus-function clauses are intended to cover the structures described herein as performing the recited function and not only structural equivalents, but also equivalent structures. Thus although a nail and a screw may not be structural equivalents in that a nail employs a cylindrical surface to secure wooden parts together, whereas a screw employs a helical surface, in the environment of fastening wooden parts, a nail and a screw may be equivalent structures.

## Claims

1. A virtual reality image capture device self-righting monopod configured to support and be attached to a virtual reality image capture device, the virtual reality image capture device configured to capture a 360° field of view in an image capture plane;
the virtual reality image capture device self-righting monopod configured to self-maintain a predetermined upright orientation parallel to the gravity vector by automatically applying a balancing force to counterbalance an unbalancing force acting to move the virtual reality image capture device self-righting monopod away from the upright orientation,
the virtual reality image capture device self-righting monopod dimensioned to lie within a ground-facing blind spot of an attached virtual reality image capture device.

2. The virtual reality image capture device self-righting monopod of any preceding claim, comprising two flywheels configured to rotate in opposite directions to self-maintain the predetermined upright orientation of the virtual reality image capture device self-righting monopod parallel to the gravity vector.

3. The virtual reality image capture device self-righting monopod of claim 2, comprising a third flywheel configured to resist rotation of the virtual reality image capture device self-righting monopod about an upright axis of the virtual reality image capture device self-righting monopod in use.

4. The virtual reality image capture device self-righting monopod of claim 2 or claim 3, wherein the two flywheels are located at the end of the virtual reality image capture device self-righting monopod proximal to the attachment point of the virtual reality image capture device

5. The virtual reality image capture device self-righting monopod of any of claims 2-4, wherein the two flywheels are configured to be located at an adjustable position along the length of the virtual reality image capture device self-righting monopod.

6. The virtual reality image capture device self-righting monopod of any preceding claim, further comprising a friction mat located on the base of the virtual reality image capture device self-righting monopod, the friction mat configured to resist rotation of the virtual reality image capture device self-righting monopod about the upright of the virtual reality image capture device self-righting monopod in use.

7. The virtual reality image capture device self-righting monopod of claim 1, wherein the gravity vector is normal to the image capture plane.

8. The virtual reality image capture device self-righting monopod of any preceding claim, wherein the virtual reality image capture device is configured to capture up to a 195° field of view perpendicular to and centred about the image capture plane.

9. The virtual reality image capture device self-righting monopod of any preceding claim, configured to have a height of between 60 cm and 190 cm.

10. The virtual reality image capture device self-righting monopod of any preceding claim, wherein the virtual reality image capture device self-righting monopod is telescopic between heights of 60 cm and 190 cm.

11. The virtual reality image capture device self-righting monopod of any preceding claim, comprising:
a sensor configured to detect the stability of the virtual reality image capture device self-righting monopod and provide the detected stability to a sensory indicator in communication with the sensor;
the sensory indicator configured to, based on the detected stability provided by the sensor, provide a sensory indication of one or more of:
the virtual reality image capture device self-righting monopod being stable enough to self-maintain an upright orientation following release of an external support of the virtual reality image capture device self-righting monopod;
the virtual reality image capture device self-righting monopod being self-maintained in the upright position stably enough for image capture by an attached virtual reality image capture device;
the virtual reality image capture device self-righting monopod being self-maintained in the upright position but being too unstable for image capture by an attached virtual reality image capture device; and
the virtual reality image capture device self-righting monopod being unstable and requiring an external support to prevent loss of an upright orientation.

12. The virtual reality image capture device self-righting monopod of any preceding claim, further comprising a virtual reality image capture device attached thereto.

13. A computer-implemented method for a virtual reality image capture device self-righting monopod configured to support and be attached to a virtual reality image capture device, the virtual reality image capture device configured to capture a 360° field of view in an image capture plane; the virtual reality image capture device self-righting monopod dimensioned to lie within a ground-facing blind spot of an attached virtual reality image capture device, the computer-implemented method comprising:
automatically applying a balancing force to counterbalance an unbalancing force acting to move the virtual reality image capture device self-righting monopod away from the upright orientation, to maintain a predetermined upright orientation parallel to the gravity vector of the virtual reality image capture device self-righting monopod.

14. A computer readable medium comprising computer program code stored thereon, the computer readable medium and computer program code being configured to, when run on at least one processor, perform the method of claim 13.
